# EUROPÄISCHE PATENTSCHRIFT

(11) **EP 2 078 555 B1**
(45) Veröffentlichungstag und Bekanntmachung des Hinweises auf die Patenterteilung: **28.08.2013**
(21) Anmeldenummer: 08000447.6
(22) Anmeldetag: 11.01.2008
(51) Int. Cl.: B01D 53/10, B01D 53/12, B01J 8/26, F23J 15/00, B01D 53/83, B01D 53/40

(54) **Verfahren und Anlage zur Reinigung von Abgasen**
Method and plant for cleaning exhaust gases
Procédé et installation de nettoyage de gaz d'échappement

(43) Veröffentlichungstag der Anmeldung: 15.07.2009
(73) Patentinhaber: AE&E Inova AG, 8005 Zürich (CH)
(72) Erfinder: Morf, Philipp Oliver, 8957 Spreitenbach (CH)
(74) Vertreter: Schaad, Balass, Menzl & Partner AG

(56) Entgegenhaltungen:
- EP-A- 0 550 905
- EP-A- 0 694 328
- EP-B1- 1 537 905
- DE-A1- 1 444 974
- FR-A- 2 722 113
- US-A- 5 885 539
- US-B1- 6 299 848

## Beschreibung

Die vorliegende Erfindung betrifft ein Verfahren zur Reinigung von Abgasen gemäss Anspruch 1, eine Abgasreinigungsanlage gemäss Anspruch 8, sowie die Verwendung dieser Abgasreinigungsanlage gemäss Anspruch 11.

Abgase, die beispielweise bei der Müllverbrennung entstehen, werden in der Regel gereinigt, indem darin enthaltene Schadstoffe wie HCl, HF, SO₂, Stickoxide und Dioxin sowie Stäube in einer Abgasreinigungsanlage abgeschieden werden.

Ein mögliches Verfahren zur Abscheidung von Schadstoffen aus den Abgasen stellt die trockene oder quasitrockene Sorption der Schadstoffe mittels eines Sorptionsmittels dar. Ein solches Verfahren ist in DE-A-32 35 559 beschrieben. Die Abgaswäsche, wie sie beispielsweise in Thomé-Kozmiensky, Karl J.: Thermische Abfallbehandlung, EF-Verlag für Energie- und Umwelttechnik, Berlin 1994 (Seiten 486 - 489) beschrieben ist, stellt ein AlternativVerfahren zur Behandlung von Abgasen dar.

Bei der trockenen oder quasitrockenen Sorption wird in der Regel ein Sorptionsmittel in einen Wirbelschichtreaktor eingebracht, wo es in einer zirkulierenden Wirbelschicht mit dem Abgas in Kontakt gebracht wird. Dabei sorbieren die Schadstoffe am Sorptionsmittel. Dem Wirbelschichtreaktor ist üblicherweise ein Feststoffabscheider nachgeschaltet. In diesem werden im Abgas mitgeführte Feststoffe und somit auch mit Schadstoff beladenes Sorptionsmittel abgeschieden. Die abgeschiedenen Feststoffe werden entweder ausgetragen oder zum Wirbelschichtreaktor zurückgeführt. Ein entsprechendes Verfahren ist in EP-B-1 537 905 beschrieben.

Weitere Verfahren werden etwa in den folgenden Dokumenten des Standes der Technik beschrieben:

FR-A-2 722 113 offenbart ein Verfahren zur Behandlung von Abgasen einer Müllverbrennung mit zwei in Serie angeordneten Betriebsstufen, wobei jede einen Reaktor und einen Staubextraktor aufweist, und wobei frisches Reagens in wenigstens einer Stufe eingeführt wird.

DE-A-1444974 offenbart ein Verfahren zur Entschwefelung von Industriegasen unter Verwendung einer in einem Absorptionsgefäss angeordneten heissen Wirbelschicht, die aus Oxid besteht, welches kontinuierlich zwischen dem Absorptionsgefäss und einem Gefäss zum Regenerieren des Oxids umläuft.

EP-A-0 550 905 offenbart ein Verfahren zur Reduktion von N₂0-Emissionen in bei der Verbrennung von Stickstoff-haltigen Brennstoffen in einem Fliessbett-Verbrennungsreaktor freiwerdenden Abgasen.

US-B-5,885,539 offenbart ein Verfahren zur Abtrennung von fluorhaltigen Substanzen aus einem gasförmigen Medium in einem trockenen Adsorptionsverfahren. Das Verfahren umfasst den Schritt, dass das Gas in einem trockenen Adsorptionsverfahren mit sich im Gegenstrom befindendem, partikelförmigem Aluminiumoxid behandelt wird.

EP-A-0694328 beschreibt ein Verfahren zur Abtrennung von HF, HCl, SO₂, polyhalogenierten Kohlenwasserstoffen, Hg, Quecksilberverbindungen und Staub aus einem Abgas, wobei das Verfahren die Schritte umfasst, dass das verunreinigte Abgas in einem Reaktor mit einem Absorp tionsmittel in Kontakt gebracht wird, die Gas-Feststoff-Suspension anschliessend in einen Vorabscheider geführt wird, in dem die Abscheidung des grössten Teils der Feststoffe erfolgt, und die vorgereinigte Gas-Feststoff-Suspension danach in einen Endabscheider geführt wird, in den die gesamte Menge des Absorptionsmittels eingebracht und die suspendierten Feststoffe abgetrennt werden.

Die gängigen Verfahren zur Reinigung von Abgasen mittels trockener oder quasitrockener Sorptionsverfahren arbeiten für relativ geringe und konstant anfallende Schadstofffrachten recht zuverlässig. Allerdings zeigen Betriebserfahrungen, dass diese Verfahren bei schwankenden und hohen Schadstofffrachten schnell an ihre Grenzen stossen. Dies äussert sich in einem unverhältnismässig hohen Verbrauch an Sorptionsmittel beim Versuch, die geforderten Sollwerte an Schadstoffen einzuhalten, die im gereinigten Abgas maximal vorhanden sein dürfen. Unter den genannten Bedingungen erfordert insbesondere die Einhaltung von Sollwerten für HCl im Reingas < 10 mg/m³ übermässig viel Sorptionsmittel.

Im Übrigen sind die gängigen Verfahren oft relativ aufwendig und benötigen verhältnismässig viel Platz. Dies trifft etwa für die oben erwähnten Verfahren gemäss FR-A-2722113 und EP-A-0694328 zu.

Es ist daher die Aufgabe der vorliegenden Erfindung, ein Verfahren zur Reinigung von Abgasen zur Verfügung zu stellen, welches bei einem moderaten Sorptionsmittelverbrauch einen hohen, konstanten Abscheidegrad für Schadstoffe im Abgas ermöglicht.

Die Aufgabe wird gelöst durch ein Verfahren zur Reinigung von Abgasen mittels eines trockenen oder quasitrockenen Sorptionsverfahrens gemäss Anspruch 1, durch eine Abgasreinigungsanlage gemäss Anspruch 8, sowie durch die Verwendung einer erfindungsgemässen Abgasreinigungsanlage gemäss Anspruch 11. Bevorzugte Ausführungsformen der Erfindung werden in den abhängigen Ansprüchen definiert.

Das Verfahren der vorliegenden Erfindung umfasst sowohl trockene ("dry sorption") als auch quasitrockene Sorptionsverfahren ("semi-dry sorption").

Beim erfindungsgemässen Verfahren werden die Abgase in einen ersten Reaktor eingeführt und von da in einen nachgeschalteten zweiten Reaktor geleitet. In den beiden Reaktoren werden die Abgase mittels eines trockenen oder quasitrockenen Sorptionsverfahrens gereinigt. Frisches Sorptionsmittel wird erst im zweiten Reaktor zugeführt und vom zweiten Reaktor mindestens teilweise in den ersten Reaktor geleitet.

Nach dieser zweistufigen Reinigung werden die Abgase vorzugsweise in einen nachgeschalteten Feststoffabscheider geleitet, wo, insbesondere durch einen Gewebefilter, die im Gasstrom noch vorhandenen Feststoffe abgeschieden werden. Das gereinigte Gas kann abgeführt werden. Im Feststoffabscheider abgeschiedenes Sorptionsmittel kann in den ersten Reaktor geleitet oder aus dem System entfernt werden.

Durch den erfindungsgemässen Einsatz von zwei aufeinanderfolgenden Reaktoren wird die Abscheidung von Schadstoffen am Sorptionsmittel verbessert. Insbesondere führt der zweite Reaktor zu einer besseren Schadstoffsorption nach dem (ersten) Reaktor, da das Gas-Feststoff-Gemisch besser durchmischt wird, als wenn es, wie bisher üblich, direkt zu einem Feststoffabscheider geleitet wird.

Beim erfindungsgemässen Verfahren wird das frische Sorptionsmittel erst im zweiten Reaktor zugeführt. Das frische Sorptionsmittel wird so zur weiteren Reinigung des Abgasstroms, der bereits im ersten Reaktor gereinigt wurde, eingesetzt. Der Abgasstrom im zweiten Reaktor weist nur noch eine relativ geringe Schadstoffkonzentration auf (Messungen zufolge sind etwa 98% der durch Sorptionsverfahren abscheidbaren Schadstoffe beim Austritt aus dem Wirbelschichtreaktor abgeschieden), was üblicherweise die Geschwindigkeit der Sorption verringert. Dies trifft insbesondere zu, wenn das Sorptionsmittel nicht frisch ist und sich auf den Partikeln bereits eine Schicht von Reaktionsprodukten, die bei der Sorption von Schadstoffen entstehen, gebildet hat. Man nimmt an, dass durch diese Schicht verhindert wird, dass die Partikel weitere Schadstoffe binden. Durch den Einsatz von frischem Sorptionsmittel im zweiten Reaktor wird die Sorption beschleunigt und die Schadstoffentfernung verbessert. Im Vergleich zu den gängigen Verfahren kann die gleiche Reinigungsleistung schneller und mit einer geringeren Menge an Sorptionsmittel erreicht werden, da das frische Sorptionsmittel reaktiver ist als bereits verbrauchtes.

Erfindungsgemäss wird das Sorptionsmittel aus dem zweiten Reaktor mindestens teilweise in den ersten Reaktor geleitet. Dadurch kann seine Sorptionskapazität optimal genutzt werden: Beim Einsatz im zweiten Reaktor nimmt das Sorptionsmittel aufgrund des niedrigen Schadstoffgehalts der Abgase in diesem Bereich in der Regel nur relativ geringe Mengen an Schadstoffen auf. Seine Sorptionskapazität wird also im zweiten Reaktor nicht vollständig ausgeschöpft. Durch den zumindest teilweisen Einsatz des Sorptionsmittels aus dem zweiten Reaktor im ersten Reaktor kann die Gesamtmenge an benötigtem Sorptionsmittel gesenkt werden. Aufgrund der relativ hohen Schadstoffkonzentration der Abgase im ersten Reaktor kann zudem die Kapazität des Sorptionsmittels besser ausgenutzt werden.

Das erfindungsgemässe Verfahren kann insbesondere zur Reinigung von Abgasen aus einer Müllverbrennungsanlage eingesetzt werden.

Vorzugsweise wird im ersten Reaktor nur Sorptionsmittel, das bereits im zweiten Reaktor eingesetzt wurde, verwendet. Alternativ wäre es auch denkbar, dass nur teilweise Sorptionsmittel aus dem zweiten Reaktor verwendet wird und im ersten Reaktor zusätzlich frisches Sorptionsmittel zugeführt wird. Verbrauchtes Sorptionsmittel aus dem ersten Reaktor kann mit dem Abgasstrom in den zweiten Reaktor geführt oder aus dem System entfernt werden, beispielsweise über eine Schleuse.

Erfindungsgemäß wird als erster Reaktor ein Wirbelschichtreaktor eingesetzt. Das Sorptionsmittel liegt dabei in Form einer zirkulierenden Wirbelschicht (auch als "zirkulierendes Wirbelbett" bezeichnet) vor, welche dadurch zustande kommt, dass die im Abgas enthaltenen Feststoffpartikel einschliesslich des zugeführten Sorptionsmittels durch die aufwärtsgerichtete Strömung des Abgases in einen Schwebezustand versetzt werden. Durch chemische Reaktion mit dem Sorptionsmittel in der zirkulierenden Wirbelschicht werden die im Abgas enthaltenen Schadstoffe auf den Sorptionsmittel-Partikeln abgeschieden.

In einer bevorzugten Ausführungsform wird in den ersten Reaktor - ein Wirbelschichtreaktor - Wasser eingedüst. Durch das Eindüsen von Wasser kann die Abgastemperatur im Reaktor geregelt werden. Zum Beispiel kann die Temperatur im Reaktor konstant auf einem bestimmten Wert gehalten werden. Je nach verwendetem Sorptionsmittel und je nach Schadstoffzusammensetzung kann die Temperatur derart variiert werden, dass die Sorption optimal ist. Vorzugsweise wird die Temperatur im ersten Reaktor bei einem Wert von ca. 140-150 °C gehalten. Ausserdem führt das Eindüsen von Wasser auch zu einem positiven Effekt bezüglich Schadstoffsorption: Durch die Benetzung des Sorptionsmittels wird seine Sorptionskapazität verbessert.

Im erfindungsgemässen Verfahren wird als zweiter Reaktor ein Flugstromreaktor, insbesondere ein Fallrohrreaktor eingesetzt. Ein Beispiel für einen Fallrohrreaktor ist beschrieben in Zenklusen, Fabian: Bildung homogener Gas-Feststoff-Suspensionen für FallrohrReaktoren bei hohen Geschwindikeiten, Dissertation ETH Nr. 12810 (Seiten 9 und 11-15). Die Geometrie von Fallrohrreaktoren kann so gewählt werden, dass die Dispersion des zirkulierten Sorptionsmittels optimal ausgestaltet werden kann. Durch den Einsatz von frischem Sorptionsmittel und seiner guten Dispersion im zweiten Reaktor wird die Schadstoffsorption im erfindungsgemässen Verfahren optimiert.

In einer bevorzugten Ausführungsform wird das frische Sorptionsmittel über eine Venturidüse in den zweiten Reaktor eingeführt. Der Einsatz einer Venturidüse erlaubt eine optimale Durchmischung von Abgasen und Sorptionsmittel. Durch die dadurch erreichte Verbesserung der Dispersion wird eine verbesserte Sorption der in den Abgasen enthaltenen Schadstoffe erreicht.

Vorzugsweise wird für das Verfahren der vorliegenden Erfindung ein Sorptionsmittel auf Calcium-, Natrium-, mineralischer und/oder Kohlenstoffbasis verwendet. Kalkhydrat (Ca(OH)₂), zum Beispiel, weist in der Regel einen Reinheitsgrad von mindestens 92% und eine spezifische Oberfläche von mindestens 15 m²/g auf. Allerdings ist eine Vielzahl weiterer Sorptionsmittel wie Natriumbicarbonat (NaHCO₃), Spongiacal® (Rheinkalk) oder Sorbalit® (Märker Umwelttechnik GmbH) denkbar. Erfindungsgemäss kann ein einzelnes Sorptionsmittel oder eine Mischung verschiedener Sorptionsmittel verwendet werden.

Wird Kalkhydrat als Sorptionsmittel verwendet, reagieren die Schadstoffe SO₂, HCl und HF gemäss den folgenden Reaktionsgleichungen zu den entsprechenden Salzen:

Ca(OH)₂ + H₂O + SO₂ → CaSO₃ (Calciumsulfit) + 2 H₂O

Ca(OH)₂ + 2 HCl → CaCl₂ (Calciumchlorid) + 2 H₂O

Ca(OH)₂ + 2 HF → CaF₂ (Calciumfluorid) + 2 H₂O

Die Temperatur für die Schadstoffabscheidung liegt dabei bevorzugt bei ca. 140-150 °C.

In der Regel liegt in der zirkulierenden Wirbelschicht zudem Aktivkohle (Herdofenkoks) vor, an dem zusätzlich Schadstoffe adsorbiert und aus dem Abgas abgeschieden werden.

Ein Verfahren zur Regelung der zuzuführenden Menge des Sorptionsmittels wird beispielsweise in EP 1964602 beschrieben: Der Massenstrom des frischen zugeführten Sorptionsmittels wird in Abhängigkeit der Konzentration entweder des frischen Sorptionsmittels oder eines sorbierten Schadstoffs oder von beiden im rezirkulierten Feststoff geregelt. Hierbei wird die Restsorptionskapazität des rezirkulierten Feststoffs berücksichtigt und der Verbrauch an Sorptionsmittel kann minimal gehalten werden.

Gemäss EP 1964602 wird die Konzentration entweder des frischen Sorptionsmittels oder eines sorbierten Schadstoffs oder von beiden im rezirkulierten Feststoff im wesentlichen kontinuierliche bestimmt, so dass möglichst rasch auf Systemänderungen reagiert werden kann. In einer bevorzugten Ausführungsform erfolgt die Bestimmung mittels eines Fourier-Transform-Nahinfrarot-Spektrometers (FT-NIR-Spektrometer). Dieses erlaubt eine kontinuierliche quantitative Analyse des rezirkulierten Feststoffes. Mittels einer in der Abgasreinigungsanlage angeordneten Sonde kann die Analyse *in situ* durchgeführt werden. Alternativ zur Analyse *in situ* kann die Bestimmung anhand einer mittels eines kleinen Zyklons aus der Zirkulation entnommenen Feststoffprobe durchgeführt werden. Dabei erfolgt die Bestimmung chargenweise. Erfolgt die Probeentnahme in kurzen Zeitabschnitten, kann mit dieser Ausführungsform eine quasi-kontinuierliche Bestimmung durchgeführt werden.

Zudem kann in einem weiteren Regelkreis der Druckverlust über das Wirbelbett im Reaktor überwacht und der in den Wirbelschichtreaktor rezirkulierte Massenstrom an Sorptionsmittel kontinuierlich gesteuert werden, um ein konstantes Inventar an Bettmaterial im Wirbelschichtreaktor aufrechtzuerhalten.

Nebst dem beschriebenen Verfahren betrifft die vorliegende Erfindung auch eine Abgasreinigungsanlage zur Durchführung dieses Verfahrens gemäss Anspruch 8. Die erfindungsgemässe Abgasreinigungsanlage weist einen ersten Reaktor und einen nachgeschalteten zweiten Reaktor auf, wobei der erste Reaktor eine Zuleitung für die Abgase aufweist und der zweite Reaktor eine Zuleitung für frisches Sorptionsmittel, und vom zweiten Reaktor ein Kanal zur Leitung des Sorptionsmittels in den ersten Reaktor führt.

Der erste Reaktor der erfindungsgemässen Abgasreinigungsanlage ist ein Wirbelschichtreaktor. Im Wirbelschichtreaktor werden die im Abgas enthaltenen Schadstoffe durch chemische Reaktion mit dem Sorptionsmittel auf den Sorptionsmittel-Partikeln abgeschieden.

In einer bevorzugten Ausführungsform weist der erste Reaktor der erfindungsgemässen Abgasreinigungsanlage eine Vorrichtung zum Eindüsen von Wasser auf. Dadurch kann die Temperatur im ersten Reaktor geregelt und die Schadstoffsorption verbessert werden.

Der zweite Reaktor der erfindungsgemässen Abgasreinigungsanlage ist ein Flugstromreaktor, insbesondere ein Fallrohrreaktor. Der Fallrohr- oder Flugstromreaktor führt zu einer optimalen Durchmischung von Abgasen und Sorptionsmittel und verbessert dadurch die Sorption von Restschadstoffen aus den Abgasen.

Vorzugsweise wird das frische Sorptionsmittel über eine Venturidüse zugeführt, um eine optimale Durchmischung von Sorptionsmittel und Abgasen zu erreichen. Vorzugsweise wird ein Sorptionsmittel auf Calcium-, Natrium-, mineralischer und/oder Kohlenstoffbasis eingesetzt, zum Beispiel Kalkhydrat, Natriumbicarbonat oder eine Mischung davon. Alternativ sind aber auch andere Sorptionsmittel oder Mischungen von mehreren Sorptionsmitteln denkbar, die beispielsweise Spongiacal® oder Sorbalit® beinhalten.

In einer bevorzugten Ausführungsform wird bei der erfindungsgemässen Abgasreinigungsanlage der Massenstrom des frischen zugeführten Sorptionsmittels in Abhängigkeit der Konzentration entweder des frischen Sorptionsmittels oder eines sorbierten Schadstoffs oder von beiden im rezirkulierten Feststoff geregelt. In der Regel weist die Abgasreinigungsanlage dazu eine Analysevorrichtung, insbesondere ein FT-NIR-Spektrometer, auf. Weiter kann die Abgasreinigungsanlage der vorliegenden Erfindung einen Zyklon zur Entnahme von Proben des rezirkulierten Feststoffes aufweisen, wobei die Analysevorrichtung vorzugsweise mit dem Zyklon verbunden ist.

Im Weiteren betrifft die vorliegende Erfindung auch die Verwendung einer erfindungsgemässen Abgasreinigungsanlage zur Reinigung von Abgasen aus einer Müllverbrennungsanlage. Abgase, die bei der Müllverbrennung entstehen, enthalten in der Regel verschiedene Schadstoffe wie HCl, HF, SO₂, Stickoxide oder Dioxin, sowie Stäube. Durch den Einsatz einer erfindungsgemässen Abgasreinigungsanlage können HCl, HF, SO₂ und/oder Dioxin mit den oben beschriebenen Vorteilen abgeschieden werden.

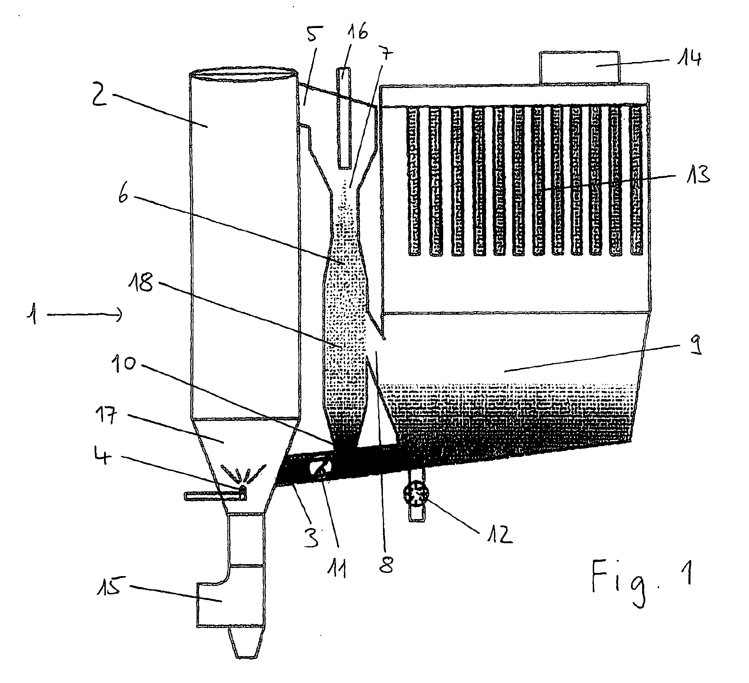

Die vorliegende Erfindung wird anhand der Figur 1 weiter erläutert, die rein schematisch eine erfindungsgemässe Abgasreinigungsanlage zeigt.

Die Abgasreinigungsanlage 1 umfasst einen ersten Reaktor 2 in Form eines Wirbelschichtreaktors, einen zweiten Reaktor 6 in Form eines Fallrohrreaktors, sowie einen Feststoffabscheider 13 in Form eines Gewebefilters. Der erste Reaktor 2 weist im wesentlichen die Form eines Hohlzylinders auf, der sich nach unten kegelförmig verjüngt. Am unteren Ende des verjüngten Bereichs 17 weist der erste Reaktor 2 eine Zuleitung 15 auf, über die zu reinigende Abgase in den ersten Reaktor 2 eingeführt werden. Das sich im ersten Reaktor 2 befindende Sorptionsmittel wird von den in den ersten Reaktor 2 einströmenden Abgasen mitgenommen und bildet eine zirkulierende Wirbelschicht (nicht gezeigt). In den verjüngten Bereich 17 des ersten Reaktors 2 mündet ein Kanal 3 ein. Ausserdem weist der erste Reaktor 2 in seinem unteren, verjüngten Bereich 17 eine Wasserdüse 4 auf, über die in den ersten Reaktor 2 Wasser eingedüst werden kann. Durch das Eindüsen von Wasser kann die Temperatur im ersten Reaktor 2 geregelt und die Schadstoffsorption verbessert werden.

Das obere Ende des ersten Reaktors 2 ist durch einen Verbindungskanal 5 mit einem trichterförmigen Eintrittsbereich 7 des zweiten Reaktors 6 verbunden. Durch diesen Verbindungskanal 5 werden die Abgase aus dem ersten Reaktor 2 in den zweiten Reaktor 6 eingeführt. Dabei gelangt verbrauchtes Sorptionsmittel aus dem ersten Reaktor 2 in den zweiten Reaktor 6.

Der zweite Reaktor 6 umfasst einen unterhalb des Eintrittsbereichs 7 gelegenen Sorptionsbereich 18, der im wesentlichen die Form eines Hohlzylinders hat, der nach oben, zum Eintrittsbereich 7 hin, und nach unten kegelförmig verjüngt ist. Der zweite Reaktor 6 weist am oberen Ende des Eintrittsbereichs 7 eine Zuleitung 16 für frisches Sorptionsmittel in Form einer Venturidüse auf. Im Eintrittsbereich 7 des zweiten Reaktors 6 werden Abgase und Sorptionsmittel durchmischt.

Vom Sorptionsbereich 18 des zweiten Reaktors 6 führt ein nach unten geneigter Kanal 8 weg. Durch diesen Kanal 8 werden die gereinigten Abgase vom zweiten Reaktor zum Feststoffabscheider 13 geleitet. Im Feststoffabscheider 13, der mehrere Einzelfilter umfasst, werden im Abgas enthaltene Feststoffe abgetrennt. Oberhalb des Feststoffabscheiders 13 weist die Abgasreinigungsanlage 1 einen Auslass 14 auf, durch den die gereinigten Abgase aus der Abgasreinigungsanlage 1 entfernt werden.

Der Sorptionsbereich 18 des zweiten Reaktors 6 weist an seinem unteren Ende einen Auslass 10 auf, der mit dem Kanal 3 zur Leitung des Sorptionsmittels in Form einer Feststoffrinne verbunden ist. Die Feststoffrinne verläuft in Richtung zum ersten Reaktor 2 schräg nach unten. Ein Teil des Sorptionsmittels aus dem zweiten Reaktor 6 gelangt durch den Auslass 10 aus dem zweiten Reaktor 6 in die Feststoffrinne und wird über diese aufgrund der Gravitation zumindest teilweise in den ersten Reaktor 2 geleitet. Ein weiterer Teil des Sorptionsmittels gelangt zusammen mit den gereinigten Abgasen durch den Kanal 8 in den Feststoffabscheider 13 und wird in einem schräg nach unten verlaufenden Filterbunker 9 gesammelt. Der Filterbunker 9 ist in seinem unteren Bereich ebenfalls mit der Feststoffrinne 3 verbunden.

Im Bereich des Filterbunkers 9 weist der Kanal 3 einen Auslass 12 mit einer Zellenradschleuse auf, über den überschüssiges und verbrauchtes Sorptionsmittel zusammen mit den übrigen abgeschiedenen Feststoffen aus der Abgasreinigungsanlage 1 entfernt werden kann. Ausserdem weist der Kanal 3 im Bereich zwischen dem zweiten Reaktor 6 und dem ersten Reaktor 2 eine Dosierwalze 11 auf, durch die sich die Menge an Sorptionsmittel, das aus dem Kanal 3 in den ersten Reaktor 2 geleitet wird, regeln lässt.

## Patentansprüche

1. Verfahren zur Reinigung von Abgasen mittels eines trockenen oder quasitrockenen Sorptionsverfahrens, in dem die Abgase in einen ersten Reaktor (2) eingeführt und vom ersten Reaktor (2) in einen nachgeschalteten zweiten Reaktor (6) geleitet werden und frisches Sorptionsmittel erst zum zweiten Reaktor (6) zugeführt und vom zweiten Reaktor (6) mindestens teilweise in den ersten Reaktor (2) geleitet wird, wobei der erste Reaktor ein Wirbelschichtreaktor ist, in dem das Sorptionsmittel in Form einer zirkulierenden Wirbelschicht vorliegt, und der zweite Reaktor (6) ein Flugstromreaktor ist.

2. Verfahren nach Anspruch 1, **dadurch gekennzeichnet, dass** in den ersten Reaktor (2) Wasser eingedüst wird.

3. Verfahren nach einem der vorangehenden Ansprüche, **dadurch gekennzeichnet, dass** der zweite Reaktor (6) ein Fallrohrreaktor ist.

4. Verfahren nach einem der vorangehenden Ansprüche, **dadurch gekennzeichnet, dass** die Abgase vom zweiten Reaktor (6) zu einem Feststoffabscheider (13) geleitet werden.

5. Verfahren nach einem der vorangehenden Ansprüche, **dadurch gekennzeichnet, dass** das frische Sorptionsmittel über eine Venturidüse zugeführt wird.

6. Verfahren nach einem der vorangehenden Ansprüche, **dadurch gekennzeichnet, dass** ein Sorptionsmittel auf Calcium-, Natrium-, mineralischer und/oder Kohlenstoffbasis eingesetzt wird.

7. Verfahren nach einem der vorangehenden Ansprüche, **dadurch gekennzeichnet, dass** der Massenstrom des frischen zugeführten Sorptionsmittels in Abhängigkeit der Konzentration entweder des frischen Sorptionsmittels oder eines sorbierten Schadstoffs oder von beiden im rezirkulierten Feststoff geregelt wird.

8. Abgasreinigungsanlage (1) zur Reinigung von Abgasen mittels eines trockenen oder quasitrockenen Sorptionsverfahrens, welche einen ersten Reaktor (2) und einen nachgeschalteten zweiten Reaktor (6) aufweist, wobei der erste Reaktor (2) eine Zuleitung (15) für die Abgase aufweist und der zweite Reaktor (6) eine Zuleitung (16) für frisches Sorptionsmittel, und vom zweiten Reaktor (6) ein Kanal (3) zur Leitung des Sorptionsmittels in den ersten Reaktor (6) führt, wobei der erste Reaktor ein Wirbelschichtreaktor ist, in dem das Sorptionsmittel in Form einer zirkulierenden Wirbelschicht vorliegt, und der zweite Reaktor (6) ein Flugstromreaktor ist.

9. Abgasreinigungsanlage (1) nach Anspruch 8 , **dadurch gekennzeichnet, dass** der zweite Reaktor (6) ein Fallrohrreaktor ist.

10. Abgasreinigungsanlage (1) nach Anspruch 8 oder 9, **gekennzeichnet durch** einen dem zweiten Reaktor (6) nachgestellten Feststoffabscheider (13).

11. Verwendung einer Abgasreinigungsanlage (1) nach einem der Ansprüche 8 bis 10 zur Reinigung von Abgasen aus einer Müllverbrennungsanlage.

## Claims

1. Method for cleaning exhaust gases by means of a dry or quasi-dry sorption process, in which the exhaust gases are introduced into a first reactor (2) and are passed from the first reactor (2) into a downstream second reactor (6) and fresh sorption agent is fed first to the second reactor (6) and is at least partially passed from the second reactor (6) into the first reactor (2), the first reactor being a fluidized-bed reactor, in which the sorption agent is present in the form of a circulating fluidized bed, and the second reactor (6) being an entrained-bed reactor.

2. Method according to Claim 1, **characterized in that** water is injected into the first reactor (2).

3. Method according to one of the preceding claims, **characterized in that** the second reactor (6) is a downcomer reactor.

4. Method according to one of the preceding claims, **characterized in that** the exhaust gases are passed from the second reactor (6) to a solids separator (13).

5. Method according to one of the preceding claims, **characterized in that** the fresh sorption agent is fed in by way of a venturi nozzle.

6. Method according to one of the preceding claims, **characterized in that** a calcium-, sodium-, mineral- and/or carbon-based sorption agent is used.

7. Method according to one of the preceding claims, **characterized in that** the mass flow of the fresh fed-in sorption agent is controlled in dependence on the concentration of either the fresh sorption agent or a sorbed pollutant or both in the recirculated solid matter.

8. Exhaust-gas cleaning plant (1) for cleaning exhaust gases by means of a dry or quasi-dry sorption process, which has a first reactor (2) and a downstream second reactor (6), the first reactor (2) having a feed line (15) for the exhaust gases and the second reactor (6) having a feed line (16) for fresh sorption agent, and a duct (3) for conducting the sorption agent leading from the second reactor (6) into the first reactor (2), the first reactor being a fluidized-bed reactor, in which the sorption agent is present in the form of a circulating fluidized bed, and the second reactor (6) being an entrained-bed reactor.

9. Exhaust-gas cleaning plant (1) according to Claim 8, **characterized in that** the second reactor (6) is a downcomer reactor.

10. Exhaust-gas cleaning plant (1) according to Claim 8 or 9, **characterized by** a solids separator (13) arranged downstream of the second reactor (6).

11. Use of an exhaust-gas cleaning plant (1) according to one of Claims 8 to 10 for cleaning exhaust gases from a refuse incineration plant.

## Revendications

1. Procédé de nettoyage de gaz d'échappement par un procédé de sorption par voie sèche ou quasi sèche, dans lequel on introduit les gaz d'échappement dans un premier réacteur (2) et on les conduit du premier réacteur (2) dans un deuxième réacteur (6) qui suit et on ajoute un agent de sorption frais d'abord dans le deuxième réacteur (6) et on le conduit du deuxième réacteur (6) au moins en partie dans le premier réacteur (2), dans lequel le premier réacteur est un réacteur à lit fluidisé, dans lequel l'agent de sorption se trouve sous la forme d'une couche fluidisée circulante, et le deuxième réacteur (6) est un réacteur à flux entraîné.

2. Procédé selon la revendication 1, **caractérisé en ce que** l'on pulvérise de l'eau dans le premier réacteur (2).

3. Procédé selon l'une quelconque des revendications précédentes, **caractérisé en ce que** le deuxième réacteur (6) est un réacteur à tube de descente.

4. Procédé selon l'une quelconque des revendications précédentes, **caractérisé en ce que** l'on conduit les gaz d'échappement du deuxième réacteur (6) à un séparateur de matières solides (13).

5. Procédé selon l'une quelconque des revendications précédentes, **caractérisé en ce que** l'on ajoute l'agent de sorption frais par une tuyère de Venturi.

6. Procédé selon l'une quelconque des revendications précédentes, **caractérisé en ce que** l'on utilise un agent de sorption à base de calcium, de sodium, minérale et/ou de carbone.

7. Procédé selon l'une quelconque des revendications précédentes, **caractérisé en ce que** l'on régule le flux massique de l'agent de sorption frais ajouté en fonction de la concentration soit de l'agent de sorption frais soit d'un polluant sorbé ou des deux dans les matières solides recyclées.

8. Installation de nettoyage de gaz d'échappement (1) pour le nettoyage de gaz d'échappement par un procédé de sorption par voie sèche ou quasi sèche, qui comprend un premier réacteur (2) et un deuxième réacteur (6) qui suit, dans laquelle le premier réacteur (2) présente une conduite d'arrivée (15) pour les gaz d'échappement et le deuxième réacteur (6) présente une conduite d'arrivée (16) pour un agent de sorption frais, et un canal (3) part du deuxième réacteur (6) pour conduire l'agent de sorption dans le premier réacteur (2), dans laquelle le premier réacteur est un réacteur à lit fluidisé, dans lequel l'agent de sorption se trouve sous la forme d'une couche fluidisée circulante, et le deuxième réacteur (6) est un réacteur à flux entraîné.

9. Installation de nettoyage de gaz d'échappement (1) selon la revendication 8, **caractérisée en ce que** le deuxième réacteur (6) est un réacteur à tube de descente.

10. Installation de nettoyage de gaz d'échappement (1) selon la revendication 8 ou 9, **caractérisée par** un séparateur de matières solides (13) installé en aval du deuxième réacteur (6).

11. Utilisation d'une installation de nettoyage de gaz d'échappement (1) selon l'une quelconque des revendications 8 à 10 pour le nettoyage de gaz d'échappement provenant d'une installation d'incinération d'ordures.
